# EUROPEAN PATENT APPLICATION

(11) **EP 1 498 619 A1**
(43) Date of publication of application: **19.01.2005**
(21) Application number: 04103285.5
(22) Date of filing: 09.07.2004
(51) Int. Cl.: F16B 45/02

(54) **Snap link**

(30) Priority: 15.07.2003 IT VA20030087
(71) Applicant: Ferplast SpA, 36070 Castelgomberto (VI) (IT)
(72) Inventor: Vaccari, Carlo, 36070 Castelgomberto (VI) (IT)
(74) Representative: Petraz, Gilberto Luigi

(57) **Abstract**

A snap link (10) comprises a support body (11) equipped with first means for fixing to an object, and also comprises
- a first operating element (13) rotatingly connected to the support body (11),
- a hook (12), equipped with means of elastic loading and rotatingly connected to the support body (11), delimiting, in the closed position, a space designed to accommodate a fixing element (50), and
- a second operating element (14), presenting means of elastic loading and rotatingly connected to the support body (11).

The opening movement of the hook (12) is determined by the simultaneous operation of the first and second operating means (13, 14).

## Description

### TECHNICAL FIELD

This invention concerns a snap link.

More specifically, this invention refers to a snap link that can be applied, advantageously but not exclusively, to leads for walking pet animals.

According to a particular embodiment, this invention refers to a snap link connecting a lead to a collar, resistant to jerks and with a structure that allows it to be opened and closed easily with just one hand.

This invention can be applied in the field of mechanical industry for the production of mechanical or plastic small items in general.

### BACKGROUND ART

It is known that pet animals to be walked are usually accompanied using leads fitted with a handgrip to be held by the user and a snap link for attaching the lead to a collar.

The snap link generally consists of a central body with one longitudinal end equipped with a ring, for fixed connection with the cord of the lead, and the other end having a hook that can be closed by a pin sliding in an axial direction so that it can be attached to the collar.

The pin presents means of elastic loading designed to keep it in the closed position, so that to unhook the clip from the collar it is necessary to grip the central body with one hand and to carry out an action on the pin with the thumb of the other hand in order to open the hooking means.

These same operations are moreover indispensable in order to hook the clip onto the collar, requiring a certain care by the user in performing them.

A drawback is represented by the fact that unhooking the snap link is often awkward, especially in view of the fact that, aware that it is about to be released, the animal tends to make abrupt movements that hinder the action of the user.

This situation constitutes a risk for the user who can be subjected to violent jerks if the animal is large.

Another drawback is represented by the fact that during the hooking phase the snap link requires manual opening of the closing pin with inevitable restraint of the animal's collar. This situation too is not easy to perform since the animal tends to become agitated both when released and when about to be clipped on to the lead.

### DESCRIPTION OF THE INVENTION

This invention proposes to provide a snap link that can eliminate or significantly reduce the drawbacks described above.

This invention also proposes to provide a snap link that can be easily produced so as to be economically advantageous.

This is achieved by means of a snap link with the features described in the main claim.

The dependent claims describe advantageous embodiments of the invention.

The snap link according to the invention comprises:
- a central support body equipped with first means of fixing, for example to the cord of a lead,
- a first operating element, generally consisting of a lever handle rotatingly connected to the middle portion of the support body,
- a hook, equipped with means of elastic loading rotatingly connected at one end of the central support body, delimiting, in the closed position, a space designed to accommodate a restraining element, for example the ring of a collar, and controllable by the action of the lever handle, and
- a second operating element, generally consisting of a control hand grip presenting means of elastic loading and rotatingly connected close to the longitudinal end of the central support body opposite to the end equipped with the restraining hook.

The means of elastic loading advantageously consist of helical springs presenting end arms that can be attached to come into contact with parts to be moved.

The hand grip and the hook advantageously protrude from the central body on the same side as the lever handle.

The lever handle is equipped, at one of its longitudinal ends, with a housing designed to accommodate a respective tooth integral with the hook.

The other longitudinal end of the handle presents a notch designed to accommodate a respective protrusion of the hand grip.

The means of elastic loading of the snap link tend to keep the hook and the hand grip substantially parallel to the axis of the central body and adjacent to each other in the closed position.

When the hand grip is pressed by the user's fingers, it oscillates around its pin overcoming the contrasting action of its spiral spring and causing the protrusion to penetrate the notch of the lever handle.

In this case a restraining element, for example a ring of a collar, can be inserted in the space between the hook and the body of the snap link.

When wishing to release this restraining element, it is necessary to simultaneously press the hand grip and the handle.

The latter thus carries out an angular excursion which leads to the release of the hook tooth from the housing in the handle.

The spiral spring connected to the hook pulls it into the opening position, moving it away from the hand grip and causing it to carry out an angular excursion of around 180 degrees.

The opening of the snap link thus takes place easily, using just one hand and with a simple pressing action on the central body.

If the snap link according to this invention is used as a means of connection between a lead and a collar to which a pet animal is attached, since the animal is no longer restrained the user can easily return the hook to the closed position, turning it towards the central body and arming the respective means of elastic loading.

Rearming can take place automatically, thanks to the elastic return action exercised by the spring.

### DESCRIPTION OF THE DRAWINGS

Other features and advantages of the invention will become evident on reading the following description of one embodiment of the invention, given as a non-binding example, with the help of the drawings shown in the attached sheets, in which:
- figure 1 shows an elevated side cross-section view of a snap link according to the invention, in the rest position;

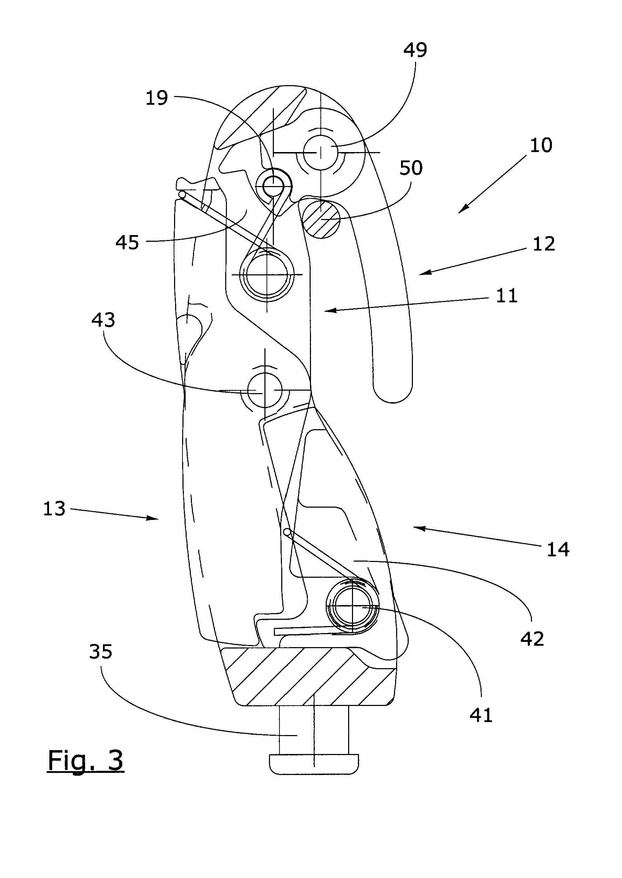

- figures 2 to 5 illustrate a sequence of operation of the opening and rearming of the snap link according to the invention;
- figures 6a, 6b and 6c show three respective elevated side views of the hook 12, the handle 13 and the hand grip 14 of the snap link according to the invention.

### DESCRIPTION OF ONE EMBODIMENT

In the figures, the reference number 10 indicates in general a snap link, in this case a snap link 10 for pet animal leads, which comprises a central support body 11 to which a hook 12, a first operating element consisting of a lever handle 13 and a second operating element consisting of a control hand grip 14 are hinged.

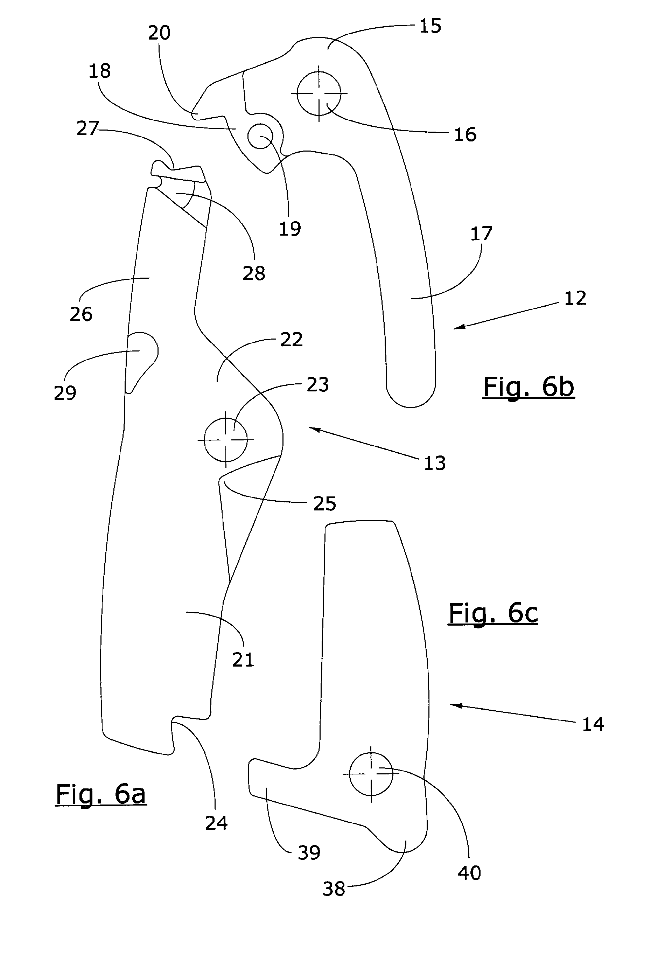

As can be seen in figure 6b, the hook 12 comprises a head 15 equipped with a through hole 16, a longitudinally extending stop arm 17 which when in use is slightly concave towards the exterior of the snap link 10.

At the opposite end with respect to the arm 17, the head 15 presents a depression 18 with a pawl 19 and a protruding tooth 20.

With reference to figure 6a, it can be seen that the lever handle 13 consists of a strip-shaped bar 21 with an enlargement 22 in its central portion.

The enlargement 22, which presents a through hole 23, ends with a notch 24 in correspondence with a longitudinal end of the handle 13 and presents a recess 25 on the side adjacent to the hole 23.

The other longitudinal end of the handle 13 consists of a strip 26 terminating with a housing 27, designed to accommodate the respective tooth 20 of the hook 12, and comprising a small transverse through cavity 28.

The side edge of the lever handle 13, opposite the part presenting the recess 25, is equipped with a pair of protruding fins 29.

The central body 11 to which the handle 13, the hand grip 14 and the hook 12 are fixed, presents a cavity bordered by side walls, each presenting a lower hole, a central hole and a central opening.

The lower longitudinal end of the body 11 presents an axially protruding pin, designed to act as a means of fixing, for example to the cord of a lead, while the lower part of the body 11 presents a tapered shape with a cross-section gradually decreasing towards the middle section.

With reference to figure 6c, it can be seen that one longitudinal end of the control hand grip 14 presents a protrusion 38 and, at the same end but on the opposite side, an overhang or hinge 39.

The hand grip 14 also presents a through hole 40 close to this end.

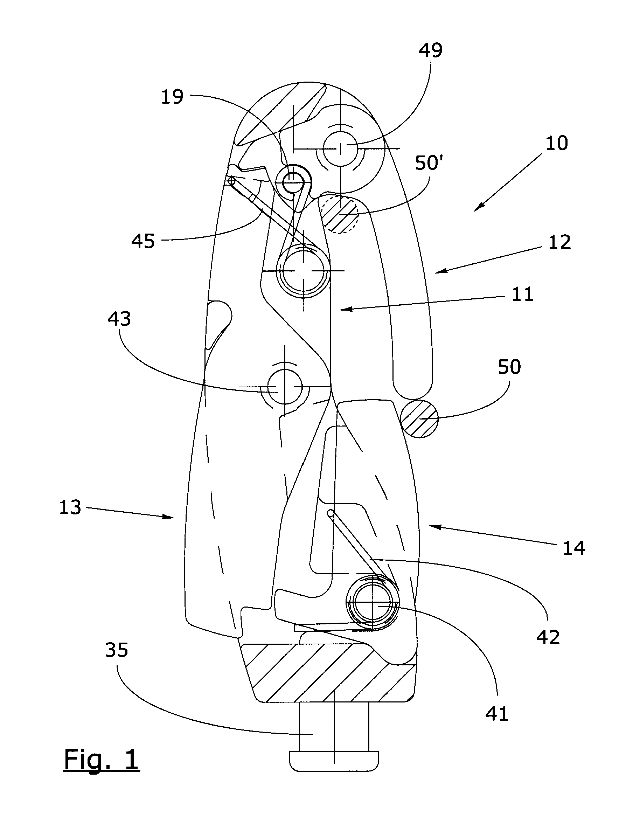

As can be seen in figure 1, the lower hole is designed to accommodate a respective pin 41 also housed in the hole 40 of the control hand grip 14.

A means of elastic loading, which can consist of a spiral spring 42, encircles the pin 41 and presents protruding arms in order to offer adequate resistance for the loading of the spring 42 during pressure of the hand grip 14 to open the snap link 10.

When the snap link 10 is closed, the overhang 39 strikes against the side of the lever handle 13 close to the notch 24.

In the closed position, the lever handle 13, hinged to a central pin 44 through the hole 23 in the handle and the holes 33 in the central body 11, has its fins 29 housed in the respective openings of the central body 11 and its housing 27 occupied by the tooth 20 of the hook 12.

The upper portion of the central body 11 is equipped with a second means of elastic loading that can consist of a spiral spring 45 presenting an arm equipped with an end hook which is fixed to the pawl 19 of the hook 12.

The spring 45 has a second counter arm which is housed inside the through side cavity 28 of the lever handle 13.

The snap link 10 also comprises an upper pin 49 which acts as a hinge for the hook 12 passing through the hole 16 in the hook 12 and the corresponding hole in the central body 11.

When in use, a means of restraint, for example a ring 50 connected to the collar of an animal, can be inserted in the snap link 10 by simply placing it in the area between the end of the lever 17 and the hand grip 14 (see fig. 1).

Pressure on the hand grip 14 leaves an opening for insertion of the ring 50 in the space between the hook 12 and the body 11.

The ring 50 then normally moves to the position indicated by the reference number 50'.

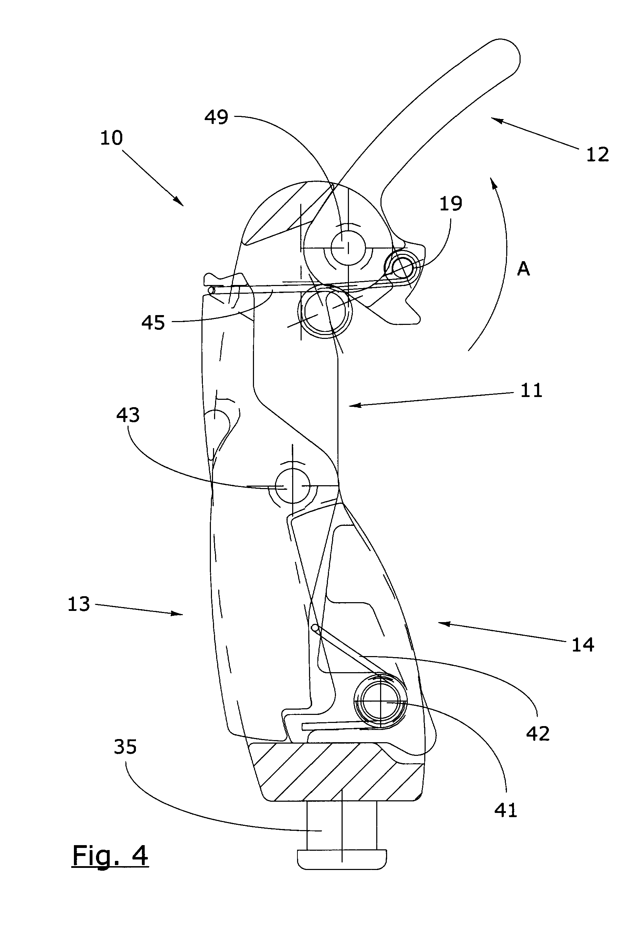

Release of the ring 50 (and, for example, the consequent release of the animal to which it is attached) takes place by opening the snap link 10, i.e. by rotating the hook 12 in the direction indicated by the arrow A in figure 4.

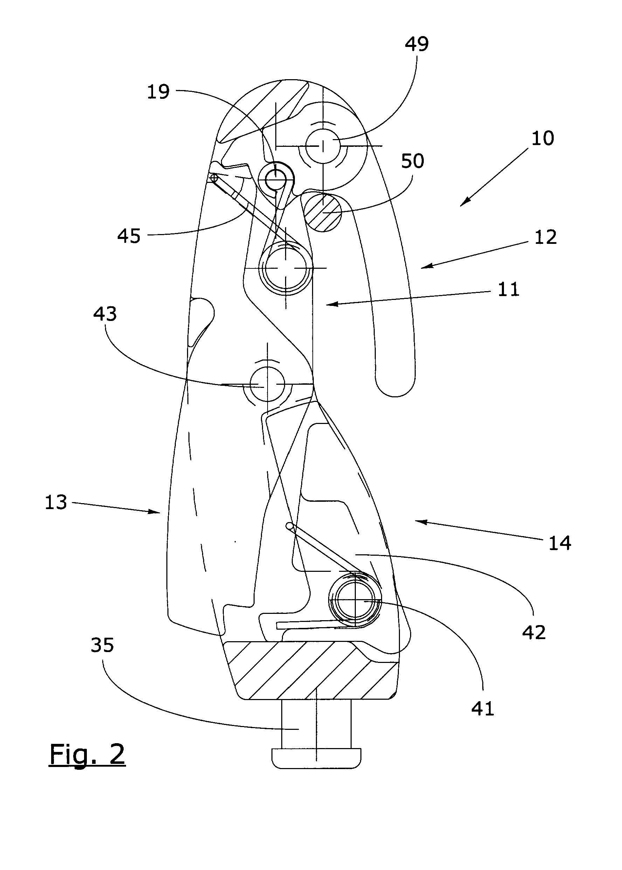

In this case, the snap link 10 is opened by pressing the control hand grip 14 (fig. 2) and the lever handle 13 (fig. 13) moving them closer to the central body 11.

In this situation, part of the hand grip 14 becomes inserted in the recess 25 of the handle 13 while the overhang 39 occupies the notch 24, allowing the movement of the lever handle 13 in a clockwise direction (arrow A, figure 4).

This movement releases the tooth 20 from the housing 27 allowing the hook 12 to snap open by the action of the spiral spring 45.

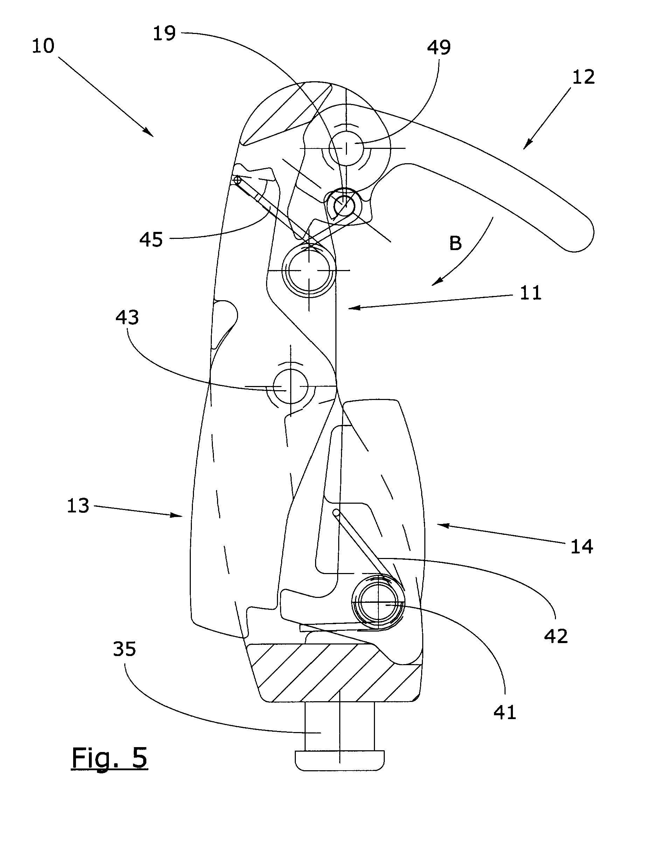

Rearming this spring normally takes place automatically, when pressure on the handle 13 is released, thanks to the return effect of the spring 45 (arrow B, figure 5), or manually by pulling the hook 12 down close to the control hand grip 14 in the closed position.

The snap link 10 can be made from corrosion-resistant metal or rigid composite plastic.

The invention is described above with reference to a preferred embodiment.

It is nevertheless clear that the invention is susceptible to numerous variations within the framework of technical equivalents.

In particular, it is clear that the use of the snap link according to the invention is not limited to the field of accessories for small pet animals. The snap link according to the invention does instead have a universal use and can be advantageously utilised in the sector of accessories for mountaineering equipment, sport, free time, etc.

## Claims

1. A snap link (10) comprising a support body (11) equipped with first means for fixing to an object, **characterised in that** it also comprises
- a first operating element (13) rotatingly connected to the support body (11),
- a hook (12), equipped with means of elastic loading and rotatingly connected to the support body (11), delimiting, in the closed position, a space designed to accommodate a fixing element (50), and
- a second operating element (14), presenting means of elastic loading and rotatingly connected to the support body (11),
in which the opening movement of the hook (12) is determined by the simultaneous operation of the first and second operating means (13, 14).

2. A snap link (10) according to claim 1, **characterised in that** the means of elastic loading consist of helical springs (42, 45).

3. A snap link (10) according to any of the foregoing claims, **characterised in that** the second operating element (14) and the hook (12) protrude from the central body (11) on the same side as the first operating element (13).

4. A snap link (10) according to any of the foregoing claims, **characterised in that** the hook (12) presents a tooth (20) designed to be accommodated inside a respective housing (27) in the first operating element (13), the snap link (10) being in the closed position.

5. A snap link (10) according to claim 4, **characterised in that** the longitudinal end of the first operating element (13), opposite the end presenting the housing (27), presents a notch (24).

6. A snap link (10) according to claim 5, **characterised in that** the second operating element (14) presents an overhang (39) designed to occupy this notch (24) in order to release the hook (12) to an open position.
